# EUROPEAN PATENT SPECIFICATION

(11) **EP 3 676 178 B1**
(45) Date of publication and mention of the grant of the patent: **29.06.2022**
(21) Application number: 18852340.1
(22) Date of filing: 09.08.2018
(51) Int. Cl.: B64D 15/00, C09K 3/18, C08J 9/32, C08J 9/34, B05D 1/02, B32B 7/02, C09D 5/16

(54) **NON-ICING SURFACES**
VEREISUNGSRESISTENTE FLÄCHEN
SURFACES NE GIVRANT PAS

(30) Priority: 31.08.2017 IL 25426917
(43) Date of publication of application: 08.07.2020
(73) Proprietor: Rafael Advanced Defense Systems Ltd., 3102102 Haifa (IL)
(72) Inventor: AMSALEM, Jakob, 3004244 Ramat Yishay (IL); BREUER, Orna, 3495204 Haifa (IL); MARMUR, Abraham, 3467717 Haifa (IL)
(74) Representative: Dey, Michael
(86) International application number: PCT/IL2018/050886
(87) International publication number: WO 2019/043686

(56) References cited:
- EP-A1- 0 932 540
- EP-B1- 0 932 540
- WO-A1-94/29634
- WO-A2-01/94104
- RU-C1- 2 091 986
- Vaibhav Bahadur; Mishchenko Lidiya; Hatton Benjamin; Taylor J Ashley; Aizenberg Joanna; Krupenkin Tom: "Predictive model for ice formation on superhydrophobic surfaces", Langmuir, vol. 27, no. 23, 7 September 2011 (2011-09-07), pages 14143-14150, XP055580557, ISSN: 0743-7463, DOI: :10.1021/la200816f
- K. Amsalem, S. Finkelstein, Dr. O. Breuer, Prof. A. Marmur: "Icephobic surfaces", 43rd annual conference of the Israel Polymers and Plastics Association; March 10, 2015, vol. 43, 11 January 2015 (2015-01-11), - 10 March 2015 (2015-03-10), page 1, XP009519145, Israel

## Description

### Field of the Invention

The invention is related to the problem of ice formation on external surfaces in general, including on land and sea, and of air vehicles in flight.

### Background of the Invention

Publications and other reference materials referred to herein are numerically referenced in the following text and respectively grouped in the appended Bibliography which immediately precedes the claims. Herein the term "air vehicles" is used in a generic sense to include all types of manned and unmanned aircraft and missiles.

One of the most critical problems related to the operation of air vehicles is the accumulation of ice on external surfaces. The ice is formed from drops of super-cooled water in the atmosphere that collide with the surfaces of the air vehicle and crystallize on impact. Ice that forms on the surfaces of an air vehicle affects its aerodynamic properties and can seriously affect the ability to control the flying object. Ice may form on and adhere to other surfaces, such as system operated on land or at sea, and cause malfunction of essential systems.

A summary of prior art work that is relevant to the present invention reveals that there exist two main mechanisms by which ice is formed, either from water by excessive cooling or directly from the gas phase. The more dangerous and most relevant to the present invention is ice that is formed from an aqueous solution, i.e. nucleation of ice, after impacting a surface.

The most common methods of dealing with the phenomena are heating by means of metal wires along the length of the wings and windshields, heating pitot tubes, and liquids to lower the freezing point. Also used are de-ice devices in engines and pneumatic devices to remove ice after it has formed. The best avoidance maneuver after identifying ice formation is to increase elevation and to exit the cloud, in which heavy ice formation may occur. For some types of unmanned air vehicles, even though they are able to fly at altitudes above the danger zone, this maneuver is ineffective because their rate of ascent is relatively slow, leaving them for a relatively long time at dangerous altitudes.

Deicing systems are considered to be difficult to maintain, expensive to repair and not effective with all types of air vehicles. Most of the systems are electro-thermic. In case of malfunction of the temperature control, these systems can cause damage as a result of excess heating, especially for drones whose wings are made from composite materials. Also heating requires large amounts of energy and the engines of many types of air vehicles cannot supply the additional amounts of energy that are required.

Some basic principles and definitions that are important to the phenomena of ice formation on the surfaces of air vehicles in flight will now be discussed. The theoretical models of nucleation of ice from super-cooled water droplets impacting surfaces that have been developed by other researchers will not be discussed herein since they are readily available in the art and are not relevant to the present invention, which is a practical way of dealing with this problem.

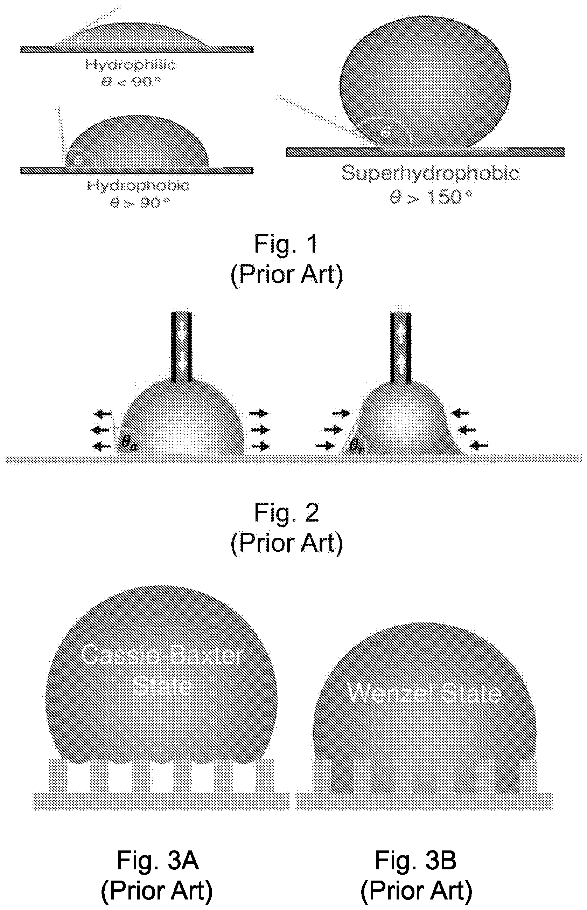

In general, surfaces can be classified in accordance with their ability to repel liquid water as hydrophylic, hydrophobic, and superhydrophobic. Fig. 1 schematically shows droplets of water on these three types of surfaces, which can be more precisely defined in terms of the contact angle (CA), i.e. the internal angle ⊖ between the surface and a tangent to the water drop. Wherein, a surface is: hydrophylic if ⊖ < 90º; hydrophobic if ⊖ ≥ 90º; and superhydrophobic if ⊖ > 150º and a water drop rolls-off the surface at an inclination of a few degrees [1].

The largest CA observed as the contact line advances is defined as the advancing CA (θₐ). Conversely, the smallest CA observed as the contact line recedes is defined as the receding CA (θᵣ). These are depicted in Fig. 2. The difference between these CAs is defined as the contact angle hysteresis (CAH). Surfaces with low CAH allow for high-mobility droplets with low adhesion and exhibit a low roll-off angle of the drop from the surface.

Super-hydrophobic surfaces are rough, hydrophobic surfaces. Several theoretical models have been developed to describe this phenomenon. The fundamental models that describe the phenomenon of super-hydrophobicity are schematically shown in Fig. 3A and Fig. 3B. These figures show the Cassie-Baxter (Fig. 3A) and Wenzel (Fig. 3B) models. According to the Cassie-Baxter model, the reason for the increase in hydrophobicity of a surface is caused by the air that is trapped in the grooves upon the surface. According to this model the contact area of the drop with the surface is reduced because the drop rests partially on air.

Over the years a great amount of interest and very much research related to the problem addressed by the present invention has been carried out, both theoretical and practical. Three areas of research that are relevant to the invention are related to the dynamics of water droplets impacting on surfaces, the adhesion of ice to surfaces and heat transfer during freezing.

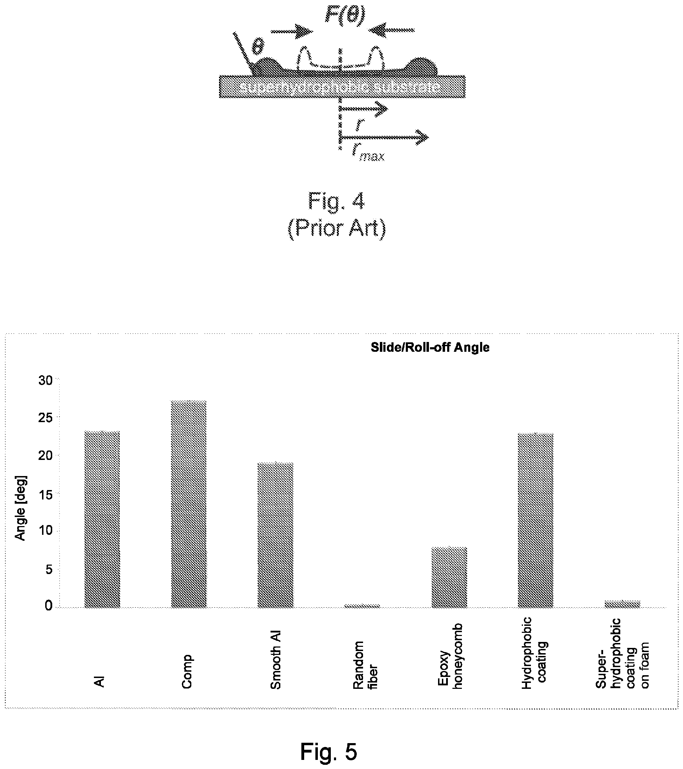

One group of researchers who studied the dynamics of water droplets impacting on surfaces is that of Vaihab Bahadur et al., who did so with the objective of building a model to predict the conditions for formation of ice on a surface at the time of impact of drops of water [2]. They found that the main phenomena that influence the formation of ice on a substrate on impact of water drops are: the dynamics of the flow, the surface chemistry, the morphology of the surface of the substrate, and parameters relating to nucleation and more. On impact with a surface, the drop is stretched over it to a maximum radius and then the surface tension of the surface causes the drop to return to its original shape. Fig. 4 schematically shows a drop of water spread on a superhydrophobic substrate on impact and the force of "retraction" on the drop, pulling it back towards its original shape [2]. One important conclusion of this research, relevant to the present invention, is that one of the keys to preventing ice formation is controlling the surface chemistry and topography. Thus, the force that returns the drop to its original shape after impact will be positive during the entire time that the drop is in contact with the surface. If this condition is satisfied then after impact the drop will rebound and leave the surface. A main conclusion from this and related work of other researchers is that the dynamics of the water drops on the substrates is a critical element when investigating the formation of ice on substrates when super-cooled water drops impact the substrate at high velocities. In an extreme case, if the droplet rebounds and doesn't remain on the surface, no ice will form.

Ice adhesion to the surface is critical because it is generally stronger on rough surfaces. As shown in previous researches, most superhydrophobic surfaces on which the dynamics of water favors the prevention of ice formation are rough surfaces. The adhesion of ice to a surface determines to a large part the ability of ice to build up on the surface and the ability of removal of the ice by shear forces that act upon it.

Many factors influence the formation of ice on surfaces during high velocity impact of supercooled water. Amongst these factors are:
- Air and surface temperature
- Liquid water content in air
- The ability of the drop to return to its initial state after impacting the surface
- Ice adhesion
- The heat transfer between the surface and the drop

Researchers have shown that surface chemistry alone is limited in its ability to prevent formation of ice on surfaces. In order to prevent, or at least to minimize wetting of a surface by a liquid, the surface should be designed so that the liquid will wet it in the Cassie-Baxter state. In that state the total contact area of the liquid with the surface is minimal. This is generally achieved by roughness or patterns on the surface. Choice of superhydrophobic surfaces to prevent formation of ice may seem natural because they are good at preventing wetting by water and can minimize the adhesion of water in the liquid state, but this subject is complex and there is no agreement amongst researchers.

Despite the fact that several studies mention the issue of heat transfer as a factor that may influence the formation of ice, no study has to date correlated directly between the rate of heat transfer and the rate of ice formation on a surface. In addition, no such approach was undertaken to solve the icing issue. For example, the paper by N. Cohen et al. [3] from 2016 related to thermal effects; however, the parameter they chose to analyze was the thermal mismatch between ice and substrate and the adhesion between. They found that low thermal conductivity substrates show higher icephobicity than high thermal conductivity substrates (metals); however, they concluded that this effect relates to thermal stresses at the ice/substrate interface.

EP0932540 [6] describes a two layer coating to be applied to external surfaces of structural members of travelling vehicles such as railroad trains in order to prevent accumulation of snow or ice on the surface. The inner layer of the coating that is in contact with the surface has a high heat-insulating capacity and the outer layer has an even, stiff and smooth surface, i.e. the outer layer is comprised of a hydrophobic material.

Amsalem, et al. [7] describes initial rudimentary work by a research group that included the inventors of the present application. In this paper is reported tests carried out using commercial coatings combined with different surface morphologies. The work reported demonstrated the ability to decrease ice accumulation by combining textured surface with a superhydrophobic coating.

Despite all of the theoretical and experimental work done on the issue of ice formation on surfaces, to date there is no known commercial solution to the problem of ice formation on the external surfaces of air vehicles in flight. To emphasize the magnitude of the problem, it is known that during the civil war in Yugoslavia the drones of the United States were grounded almost entirely during the months of November until March because of the icing conditions that prevailed. The conclusion of a research project that was carried out by Lindamae Peck, et al. [4] for the US army was that it was forbidden for most of the army's aircraft (manned and unmanned) to fly when weather forecasts predicted conditions of icing or snow.

Amirfazli and Carlo Antonini [5] present a very comprehensive overview of the current theoretical and applied state of the art relating to anti-icing surfaces. At the end of their work the authors add the following conclusion:
"The current state of the understanding and application of non-wetting (or superhydrophobic) surfaces, as anti-icing surfaces, is very promising. There are multiple mechanisms that a non-wetting surface can help with mitigating icing depending on the environmental conditions and application (e.g. if a shearing air flow exists). There are also indications that adhesion strength of ice to non-wetting surfaces can be lower than traditional surface coatings used. However, it is also clear that a coating is likely not a standalone solution but a pathway to reduce the use of thermal energy, or chemicals, or mechanical force needed to devoid a surface from ice.

It was the goal of the inventors to invent a coating that is a stand alone solution to the problem of ice formation caused by the impact of supercooled water drops on a surface, in contrast to the above conclusion.

It is therefore a purpose of the present invention to provide a coating that can be applied to a surface that will minimize or prevent the ability of drops of super-cooled water that impact on the surface from transforming into ice.

Further purposes and advantages of this invention will appear as the description proceeds.

### Summary of the Invention

In a first aspect the invention is a coating applied to a surface to minimize or prevent the ability of drops of super-cooled water that impact on the surface from transforming into ice. The coating comprises one or more layers that collectively provide:
a) thermal insulation between the surface to be protected and the drop; and
b) a superhydrophobic surface on the top.

In embodiments of the coating the insulation layer comprises a rigid foam. The foam may comprise microballoons within an epoxy matrix.

In embodiments of the coating the superhydrophobic surface is a coating that is sprayed onto the insulation.

In embodiments of the coating the surface is operative on air, ground or sea, and is one of: an electricity line; an antenna; an external surfaces of a ship including decks, rails, weapons, and antennas; and a wing or control surface of an air vehicle.

In another embodiment the surface to be coated is selected from among motor vehicles, buildings, including elevators and windows, glass surfaces and large refrigerators.

Embodiments of the coating of claim have coefficient of thermal conductivity (K) no more than 0.15 W÷ *m*°*k*), contact angle hysteresis (CAH) no more than ten degrees, and roll off angle no more than five degrees.

In a second aspect the invention is a method of minimizing or preventing the ability of drops of super-cooled water that impact on a surface from transforming into ice. The method comprises applying to the surface a coating comprising one or more layers that collectively provide:
a) thermal insulation between the surface to be protected and the drop; and
b) a superhydrophobic coating on the insulating layer.

In embodiments of the method the insulation layer comprises a rigid foam. The foam may comprise microballoons within an epoxy matrix.

In embodiments of the method the superhydrophobic coating is sprayed onto the insulation.

In embodiments of the method the surface is one of: an electricity line; an antenna; an external surfaces of a ship including decks, rails, weapons, and antennas; and a wing or control surface of an air vehicle.

In a third aspect the invention is a method for preventing ice from adhering to a surface. The method comprises providing on the surface a coating that, when coming into contact with drops of super-cooled water, prevents them from transforming into ice by providing thermal insulation between the surface to be protected and the drops, the upper surface of the coating being superhydrophobic.

In a fourth aspect the invention is an ice-phobic coating that, when coming into contact with drops of super-cooled water, prevents them from transforming into ice. The ice-phobic coating is comprised of a thermal insulation between the surface to be protected and the drops and has an upper surface which is superhydrophobic.

All the above and other characteristics and advantages of the invention will be further understood through the following illustrative and non-limitative description of embodiments thereof, with reference to the appended drawings.

### Brief Description of the Drawings

- Fig. 1 schematically shows droplets of water on hydrophylic, hydrophobic, and superhydrophobic surfaces;
- Figs. 2 schematically shows the method used for measurement of the contact angle hysteresis (CAH);
- Fig. 3A schematically shows the Cassie-Baxter model that underlies the phenomenon of superhydrophobicity; Fig. 3B schematically shows the Wentzel model used to describe the phenomenon of superhydrophobicity;
- Fig. 4 schematically shows a drop of water spread on a superhydrophobic substrate on impact and the force of "retraction" on the drop pulling it back towards its original shape;
- Fig. 5 shows typical results for the measured slide/roll-off angle for different substrates.
- Fig. 6 shows typical results for measurements of CAH for different substrates;
- Fig. 7 shows the response of water droplets impacting different surfaces at the time of impact and at different periods of time after impact;
- Fig. 8 show the normalized diameter of the drop as a function of time from the instant of impact with a surface tilted at angles of 25º ;
- Fig. 9 shows the normalized velocity of a drop of water as a function of time after impacting a surface tilted at 25º; and
- Fig. 10 schematically shows the different stages of ice formation within a drop of super cooled water.

### Detailed Description of Embodiments of the Invention

As mentioned previously, at present there is no passive technological solution (i.e., surface coating) for dealing with the problem of ice formation on external surfaces such as electricity lines, antennas of all types including dish antennas, external surfaces of ships including decks, rails, weapons, and antennas, and on the external surfaces of air vehicles in flight. The inventor's research efforts that culminated in the invention were directed to the specific problem of icing on air vehicles, however the results described herein are applicable to any surface, such as those described above, on which ice can form as a result of the impact of drops of supercooled water.

In an effort to find a practical solution to this problem the inventors investigated various substrates and the ability of several commercial hydrophobic or superhydrophobic coatings to prevent or limit ice formation under icing conditions. The most effective solution was found to be a combination of a thermally insulative layer (for example, rigid foam) and a superhydrophobic coating for example, Ultra Ever Dry (UED).

As mentioned earlier, the parameters that describe the ability of a water drop to wet a surface are the angle at which a water drop will slide or roll off the surface (designated as the roll-off angle) and the contact angle hysteresis (CAH) of the drop on the surface.

In order to measure the slide/roll-off angle the inventors used a tilt stage and measured the tilt angle with a digital angle meter. At least five drops were measured for each substrate. The measurements were carried out by starting at a random tilt angle between zero and thirty degrees. If the drop slid or rolled off the surface, then the angle was reduced gradually until the angle was reached at which no sliding or roll off occurred. If the drop didn't slide or roll off the surface, then the angle was increased gradually until the angle was reached at which sliding or roll-off occurred.

Typical results for the measured slide/roll-off angle for different substrates as a function of their coatings are shown in Fig. 5. Surfaces for which the slide/roll-off angle is less than ten degrees are classified as superhydrophobic. It can be seen that the substrates coated with UED have an especially low slide/roll-off angles.

A goniometer was used to measure the contact angle (CA) and hysteresis of the contact angle (CAH) on the substrates and the coatings. The measurements were made by photographing the drops on the surface and processing the images. The hysteresis was measured by adding and removing water from a drop in a horizontal orientation, as shown in Fig. 2.

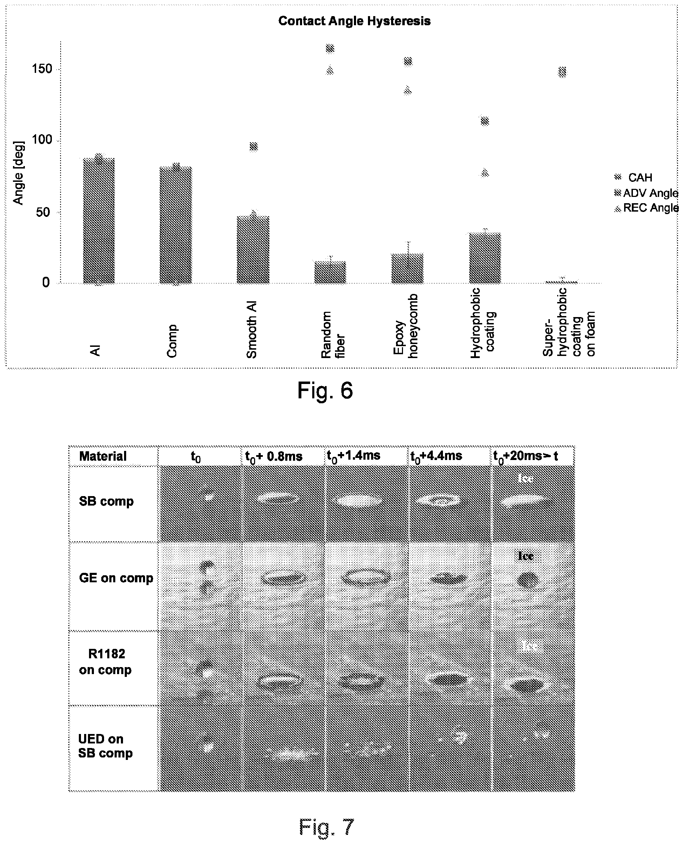

At least five measurements were made for each type of substrate. Fig. 6 shows typical results for measurements of CAH for different substrates and coatings. Seen in Fig. 6 are the CAH indicated by the solid bars, the advancing angle represented by the squares, and the receding angle represented by triangles. In Figs. 5 and 6 the hydrophobic coating (2^{nd} bar from the right) is applied to a carbon-epoxy composite substrate.

One of the most desirable characteristics of an icephobic surface is a low value of CAH. This parameter is connected with the ability of surfaces to repel water and as a measure of the adhesion of ice to the surface. From the results shown in Fig. 6, it is apparent that the surfaces coated with UED (Superhydrophobic coating on foam) stand out for having an especially low CAH.

In order to characterize the formation of ice from water drops preliminary experiments were carried out. In these experiments coated and uncoated substrates were cooled to -20ºC and water drops with a diameter of 1-2mm at a temperature of 4ºC were dripped onto the substrates from a height of 40cm. The actual temperature of the substrates was measured to be -8ºC. The experiments were filmed with a high speed camera. From the results of the experiments it was seen that ice formed on all of the substrates within a very short time with the exception of substrates coated with UED (Superhydrophobic coating on foam). These experiments were a feasibility study for finding a surface that would delay formation of ice from water droplets that impact upon it with speed. Fig. 7 shows the response of water droplets impacting different surfaces at the time of impact and at different periods of time after impact.

In Fig. 7 it can be seen the behavior of the drop at different stages from the instant of impact until it stabilizes into a new state after impact, attached to the surface and turned into ice or rebound from the surface. In the first stage after impact similar behavior can be seen for all substrates - stretching and spreading of the drop on the substrate until it reaches a maximum radius. After this waves develop within the drop that in most of the cases causes concentration of the mass of water around the circumference. However with UED (Superhydrophobic coating on composite) the drop isn't stable enough to withstand the waves and the drop breaks up into small round drops, which begin to separate from the substrate. It is important to note that beginning when the drop impacts the surface and all of the time that it is in contact with the surface there is a process of transfer of heat from the drop to the substrate. In the next stage there begins movement of water towards the center of the drop. For each material this process is governed by its surface energy, the morphology of the surface, and the kinetic energy that remains in the drop. It can be seen that on the reference substrate of the composite material (Composite) a minimal shrinking is obtained and ice with a very low contact angle is formed. On the substrates coated with hydrophobic coatings there is movement towards the center and a larger contact angle, however ice still formed. On the substrate coated with UED the water drops exploded into smaller droplets and rebounded from the surface. In addition there occurs a unique phenomenon that, after rebounding from the surface, the droplets recombined into a single large drop. This phenomenon was not known to the inventors from any of their own previous work or from any of the prior art work by other researchers with which the inventors are familiar.

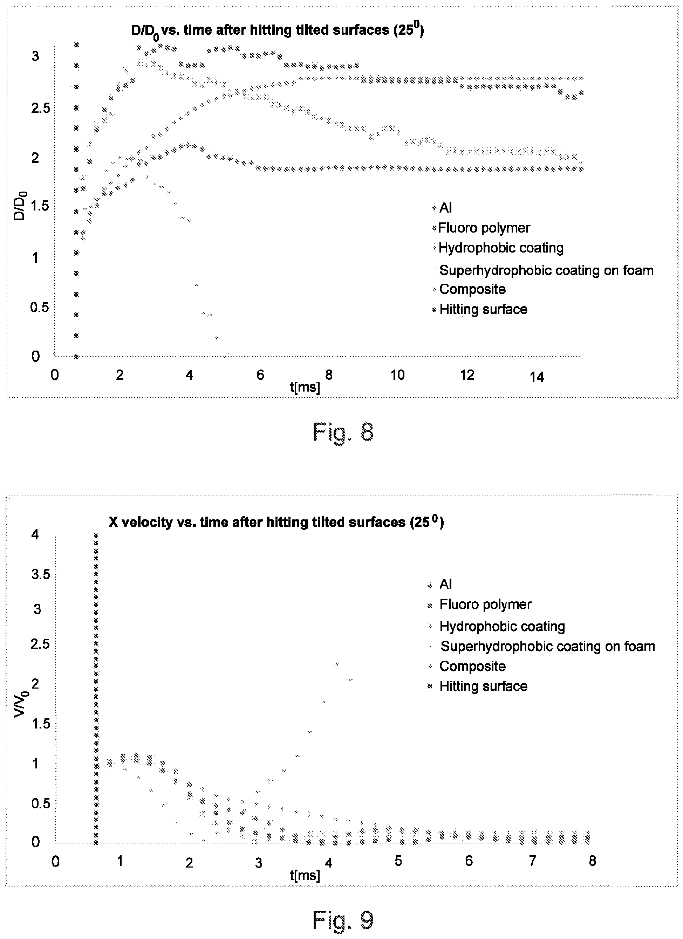

The high speed images of the experiment served for quantitative analysis of the dynamics of water drops during and after impacting on the surfaces. The speed of impact was measured from the images to be ^{~}3m/s (^{~}11kmh). Fig. 8 show the normalized diameter of the drop as a function of time from the instant of impact with a surface tilted at angles of 25º respectively. The temperature of all of the substrates was -8ºC. For the substrates not coated with Superhydrophobic coating (UED), at first the diameter grew (spreading of the drop on the surface of the substrate) and some time after that began to shrink asymptotically to a value D/D₀>1, where D is the instantaneous diameter and D₀ is the starting diameter of the drop. For the substrates coated with UED the diameter grew after impact and afterwards shrank rapidly (less than 5msec) until complete separation from the surface.

Another parameter that was measured was the normalized speed of motion of the drop on the substrate after impact. In this experiment the x-axis was defined to be in the plane of impact. Fig. 9 shows the normalized velocity (V/V₀, where V is the instantaneous velocity and V₀ the velocity at impact) of a drop of water as a function of time after impacting a surface tilted at 25º. The temperature of all of the substrates was -8ºC. For the substrates that were not coated with UED, the velocity of the drop fell rapidly to zero, that is the drops lost all of their kinetic energy on impact - apparently as a result of friction - stopped, and froze. For the surfaces with low CAH, i.e. those that were coated with UED, the loss of kinetic energy was very low such that it didn't prevent the drop from returning to its original shape and separating from the surface. On some of the substrates drops were observed that changed the direction of their velocity, but they lacked sufficient energy to complete the process. These surfaces had a CAH of 25º-35º. As opposed to these substrates, on those that were coated with UED the spread out to a maximum value (V=0), changed the direction of their velocity, returned to the shape of a drop, and rebounded from the surface, That is the drops didn't lose much kinetic energy on impact.

In order to investigate the behavior of water drops impinging on surfaces under conditions that more closely resemble those encountered by air vehicles in flight experiments were carried out in an environmental test chamber, which is capable of reaching temperatures of - 40ºC and water content in the air of between 0.25g/m³ and 2.7g/m³ depending on the temperature. The environmental test chamber has an opening in its top that allows dripping drops of water into it and temperature and humidity controls that allow accurate measurement of both of these parameters.

Experiments were carried out by dripping drops of water having diameters between 0.4-1.5mm from a height of 55 cm onto coated and uncoated substrates supported inside the environmental test chamber. The speed of the drops at impact, as measured from the high speed film, was 10-12 Kph. The experiments were carried out at temperatures between -10ºC to -40ºC. They were filmed with at a speed of 5000 frames/sec. For example, a neat aluminum substrate showed ice formation at all temperatures, UED-coated aluminum prevented ice formation down to -10 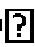 C. A composite substrate coated with UED showed no ice formation up to -20°C, in contrast to an untreated identical substrate, upon which ice formed at all conditions tested.

From the results of all of the experiments described herein above, both in the laboratory and in the environmental test chamber, it was observed that the foam substrates coated with UED succeeded to repel water drops at temperatures down to -30ºC. It appeared to the inventors that the substrate upon which the coating is applied influences the ability to prevent formation of ice, apparently because of the rate of transfer of heat between the surface and the drop.

From the results of the experiment the influence of several phenomena related to formation of ice and/or the ability to prevent ice formation was observed. Thus, the combination of an insulating surface (i.e. foam) with a superhydrophobic coating (i.e.UED) succeeded together to repel the drops of water and prevent formation of ice on various surfaces under the conditions described above. The work done to find a low density material with a low thermal transfer coefficient that can serve as a substrate for the superhydrophobic coating will be described herein below. The ice that formed on the substrates coated with the superhydrophobic coating froze with a high contact angle (CA) from which the inventors concluded that the superhydrophobic coating maintains its superhydrophobic property even at low temperatures. Additionally, freezing at a high CA results in a small contact area between the ice and the surface; therefore it was reasonable to assume that the adhesion between the ice and the surface is low.

Another significant insight gained from the work described above is that there is no direct relationship between superhydrophobicity of a surface and its ability to prevent and/or delay ice formation. The indicators of super hydrophobicity are CAH and the roll-off angle. Figs. 5, and 6 shows that a random fiber surface without a coating and foam substrates coated with UED have low roll-off angles and CAH; however, experiments showed that each surface has a different ability to prevent ice formation.

The next stage of the work was to measure the ability of different surfaces to delay or prevent ice formation under conditions that would be encountered by an air vehicle flying at speeds of 100 to 200kph. These experiments were carried out in an ice tunnel in which the flow of air reaches 112kph, the size of the water drops and amount of water in the air (according to the temperature) is controlled, and the temperature reached -20ºC (although at high speeds the temperature was lower). By this stage in the research it was clear that a superhydrophobic coating would form part of the solution to the problem that the inventors were trying to solve. Therefore, various substrates, with and without superhydrophobic coatings were glued to aluminum plates and attached to support rods inside the tunnel. In addition, a control surface made of composite material was also attached to the support rods.

From the results of the experiments it is seen that the superhydrophobic coating was effective, providing an insulating substrate was incorporated as well. In some of the cases, this combination prevented ice formation almost completely, in others it reduced the percent of coverage of ice on the substrate and in others it reduced the thickness of the layer of ice. In the cases in which ice formed, it formed at a high contact angle and the adhesion of the ice to the substrate was considerably weaker than to the reference substrates. The adhesion of the ice to the substrates was tested qualitatively by spraying compressed gas at low pressure and measuring the time and visually observing the way in which the ice was detached from the substrate. An additional affirmation to the importance of the combination of an insulating layer with a superhydrophobic coating was received when testing a composite wing, consisting of structural foam within.

It appears that the speed of the drop/air vehicle has a large influence on the ability to form ice on a surface. In the environmental test chamber, the speed of the drops was 10kph and ice didn't form at -10ºC on any of the substrates, with or without surface morphology, that were coated with a superhydrophobic coating. In the ice tunnel at similar temperatures at drop velocities of 110kph ice formed on all of the substrates without surface morphology, under all conditions. Indeed a reduction in the coverage and adhesion was achieved when compared to the reference substrates without the superhydrophobic coating; however, ice did form.

The main conclusions of the investigations carried out by the inventors at this stage that are relevant to solving the problem of preventing the formation of ice on the surfaces of air vehicles in flight are:
- Slow transfer of heat between the drops and the surface raises the chances of delaying/preventing formation of ice in the super cooled drops.
- Rebound of the drop, caused by superhydrophobicity of a surface, is essential for minimizing the contact time between drop and surface, thereby limiting the time available for the heat transfer to occur.
- Neither heat transfer nor superhydrophobicity by themselves, are sufficient to delay/prevent ice formation.

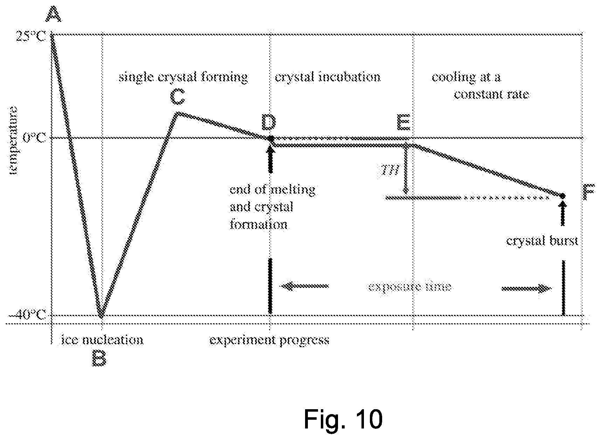

The essence of the invention can be understood by referring to Fig. 10, which is a graph of temperature vs. time that schematically shows the different stages of ice formation within a drop of super-cooled water. In the transition between stages B and C, the latent heat is released, enabling a phase transfer from liquid to solid, which is thermodynamically more stable. This leads to ice formation. Most of the latent heat is transferred from the liquid drop to the surface that it impacts. A property of the surface that influences the rate of transfer of this heat is the heat transfer constant K. D marks the end of melting and crystal formation. Crystal incubation takes place between D and E, and cooling at a constant rate occurs between E and F where crystal burst takes place.

The solution to the problem of preventing the formation of ice by drops of super cooled water impacting on the surface of a substrate that is provided by the inventors is to intervene in the stage between B and C. The intervention comprised delaying the transfer of heat by placing a "generic coating" that has a low value of K between the drop and the surface. In addition a super hydrophilic coating, which very strongly repels the water drop, is applied on top of the generic coating to shorten the time of contact of the drop with the surface.

The results of all of the above experiments show that a thermally insulating medium that repels water (i.e. superhydrophobic) constitutes a solution to the issue of ice formation on surfaces. An example for such an implementation is a combination of insulating foam with a superhydrophobic coating on it. This implementation can be provided in a coating comprised of one layer, i.e. an insulating material whose surface is superhydrophobic; in a coating comprised of two separate layers, i.e. an insulating material on top of which is applied a superhydrophobic coating; or a coating comprised of several layers, which constitute a combination of insulating and superhydrophobic materials.

This structure combines two central features:
1. Shortening the time the drop is on the surface and reducing the area of contact of the drop with the surface by means of the superhydrophobic coating.
2. Preventing the transfer of enough heat from the drop to the surface to form ice by means of the insulating layer between the body of the object to be protected and the drop.

This approach provides a solution applicable to all substrates, whether metal, composite materials, or any other, and is referred to as a "Generic Coating".

The concept of a generic coating was investigated by producing samples consisting of a substrate (i.e., composite or aluminum) with an insulating layer (e.g., rigid foam), and a superhydrophobic coating (e.g., UED). This was characterized by means of static and dynamic experiments.

Two commercial rigid foams Rohacell^{©} RIMA 51 and Rohacell^{©} HP 31 were used in the experiments as well as a syntactic foam prepared by the inventors that comprised microballoons within an epoxy matrix foam, the components of which were mixed together and subsequently cast onto a substrate after which UED was sprayed onto the foam after its curing.

An experiment was performed to determine the minimum thickness of the prepared insulating layer on aluminum that would show improved ice prevention. Three different thicknesses were examined, and it was concluded that 1.15mm is the ideal thickness of the insulating layer on a foundation of aluminum to prevent icing.

After the static experiments, dynamic experiments were carried out in the ice tunnel. Samples of carbon-epoxy composite material similar to those used in air vehicles were coated with the insulating layer described herein above and a top coating of UED. Samples of composite material coated only with UED were also used in the experiments.

The dynamic experiments were carried out under the following conditions: temperature -18ºC; drops of super cooled water with diameters of tens of microns; wind speed 200kph, and angle between the wind direction and the surfaces 45º.

Very little ice formed on the samples with the generic coating and UED and no ice piled up, although continuous layers of ice formed on the supports holding the samples. The experiment was halted after one minute since no ice piled up on the samples. The technician who entered the ice tunnel to remove the samples was able to remove the ice that had formed by blowing on the surface.

On the samples coated with UED only, ice formed in a discontinuous manner in the form of islands in a similar manner to that observed in earlier experiments in the ice tunnel described herein above.

Although embodiments of the invention have been described by way of illustration, it will be understood that the invention may be carried out with many variations, modifications, and adaptations, without exceeding the scope of the claims.

### Bibliography

[1] Karl Borg, Vincent Cregan, Andrew Fowler, Mark McGuinness, Stephen B.G. O'Brien, Leonard W. Schwartz and Vladimir Zubkov, "Partial Wetting Phenomena in Superhydrophobic Microchannels", study group report.
[2] Vaibhhab Bahadur, L. Mischenko, Benjamin Hatton, J. Ashley Taylor, Joanna Aizenberg and Tom Krupenkin, "Predictive Model for Ice Formation on Superhydrophobic Surfaces", Langmuir, Sept. 07, 2011, 14143-14150.
[3] N. Cohen, A. Dotan, H. Dodiuk, and S. Kenig, Thermomechanical Mechanisms of Reducing Ice Adhesion on Superhydrophobic Surfaces, Langmuir 2016, 32, 9664-9675
[4] Lindamae Peck, Charles C. Ryerson, and C. James Martel, "Army Aircraft Icing", ERDC/CRREL TR-02-03, September 2002.
[5] Alidad Amirfazli and Carlo Antonini, "Fundamentals of Anti-Icing Surfaces", chapter 11 [Please provide the bibliographic details for the book.]
[6] EP0932540
[7] Amsalem K, Finkelstein S, Breuer O, Marmur A: "Icephobic surfaces", II January 2015 (2015-01-11)

## Claims

1. A coating applied to a surface to minimize or prevent the ability of drops of super-cooled water that impact on the surface from transforming into ice, the coating comprising either:
A) one layer comprised of a thermally insulating material, wherein the upper surface of the one layer is superhydrophobic;
or,
B) two or more layers that constitute a combination of thermally insulating materials and superhydrophobic materials, wherein the upper surface of the two or more layers is superhydrophobic;
wherein the coating has a coefficient of thermal conductivity (K) no more than 0.15 W÷ (m°k), contact angle hysteresis (CAH) no more than ten degrees, and roll off angle no more than five degrees.

2. The coating of claim 1, wherein the insulation layer is comprised of rigid foam.

3. The coating of claim 2, wherein the rigid foam is comprised of microballoons within an epoxy matrix.

4. The coating of claim 1, wherein the superhydrophobic surface is a coating that is sprayed onto an insulation layer.

5. The coating of claim 1, wherein the surface is operative on air, ground or sea, and is one of:
an electricity line; an antenna; an external surfaces of a ship including decks, rails, weapons, and antennas; and a wing or control surface of an air vehicles.

6. A method of minimizing or preventing the ability of drops of super-cooled water that impact on a surface from transforming into ice, the method comprising applying to the surface the coating of claim 1.

7. The method claim 6, wherein the insulation is provided by using rigid foam.

8. The method of claim 7, wherein the rigid foam is comprised of microballoons within an epoxy matrix.

9. The method of claim 6, wherein the superhydrophobic coating is sprayed onto the insulation.

10. The method of claim 6, wherein the surface is one of: an electricity line; an antenna; an external surfaces of a ship including decks, rails, weapons, and antennas; and a wing or control surface of an air vehicle.

11. The method of claim 6, wherein the surface to be coated is selected from among motor vehicles, buildings, including elevators and windows, glass surfaces and large refrigerators.

12. A method for preventing ice from adhering to a surface, the method comprising providing on said surface the coating of claim 1.

## Patentansprüche

1. Beschichtung, die auf eine Oberfläche aufgebracht wird, um die Fähigkeit von Tropfen aus unterkühltem Wasser, die auf die Oberfläche auftreffen, sich in Eis zu verwandeln, zu minimieren oder zu verhindern, wobei die Beschichtung entweder umfasst:
A) eine Schicht, die aus einem wärmeisolierenden Material besteht, wobei die obere Oberfläche der einen Schicht superhydrophob ist;
oder,
B) zwei oder mehr Schichten, die eine Kombination aus wärmeisolierenden Materialien und superhydrophoben Materialien bilden, wobei die obere Oberfläche der zwei oder mehr Schichten superhydrophob ist;
wobei die Beschichtung einen Wärmeleitfähigkeitskoeffizienten (K) von nicht mehr als 0,15 W+ (m°k), Kontaktwinkelhysterese (CAH) von nicht mehr als zehn Grad und einen Abrollwinkel von nicht mehr als fünf Grad aufweist.

2. Beschichtung nach Anspruch 1, wobei die Isolierschicht aus Hartschaum besteht.

3. Beschichtung nach Anspruch 2, wobei der Hartschaum aus Mikroballonen innerhalb einer Epoxidmatrix besteht.

4. Beschichtung nach Anspruch 1, wobei die superhydrophobe Oberfläche eine Beschichtung ist, die auf eine Isolierschicht aufgesprüht wird.

5. Beschichtung nach Anspruch 1, wobei die Oberfläche in der Luft, auf dem Boden oder auf See operativ ist und eine der folgenden ist: eine Stromleitung, eine Antenne, eine Außenfläche eines Schiffs, einschließlich Decks, Schienen, Waffen und Antennen; und eine Tragfläche oder Steuerfläche eines Luftfahrzeugs.

6. Verfahren zur Minimierung oder Verhinderung der Fähigkeit von Tropfen aus unterkühltem Wasser, die auf eine Oberfläche auftreffen, sich in Eis umzuwandeln, wobei das Verfahren Aufbringen der Beschichtung nach Anspruch 1 auf die Oberfläche umfasst.

7. Verfahren nach Anspruch 6, wobei die Isolierung durch Verwendung von Hartschaum bereitgestellt wird.

8. Verfahren nach Anspruch 7, wobei der Hartschaum aus Mikroballonen innerhalb einer Epoxidmatrix besteht.

9. Verfahren nach Anspruch 6, wobei die superhydrophobe Beschichtung auf die Isolierung aufgesprüht wird.

10. Verfahren nach Anspruch 6, wobei die Oberfläche eine der folgenden ist: eine Stromleitung, eine Antenne, eine Außenfläche eines Schiffs, einschließlich Decks, Schienen, Waffen und Antennen; und eine Tragfläche oder Steuerfläche eines Luftfahrzeugs.

11. Verfahren nach Anspruch 6, wobei die zu beschichtende Oberfläche ausgewählt ist aus Kraftfahrzeugen, Gebäuden, einschließlich Aufzügen und Fenstern, Glasflächen und großen Kühlschränken.

12. Verfahren zum Verhindern des Anhaftens von Eis an einer Oberfläche, wobei das Verfahren Aufbringen der Beschichtung nach Anspruch 1 auf die Oberfläche umfasst.

## Revendications

1. Revêtement appliqué sur une surface pour réduire au minimum ou éviter la possibilité que des gouttes d'eau surfondue qui heurtent la surface se transforment en glace, le revêtement comprenant soit :
A) une couche constituée d'un matériau thermiquement isolant, dans lequel la surface supérieure de ladite couche est superhydrophobe ;
ou,
B) deux ou plus de deux couches qui constituent une combinaison de matériaux thermiquement isolants et de matériaux superhydrophobes, dans lequel la surface supérieure des deux ou plus de deux couches est superhydrophobe ;
pour lequel le revêtement a un coefficient de conductivité thermique (K) de pas plus de 0,15 W÷(*m°k*)*,* une hystérésis d'angle de contact (CAH) de pas plus de dix degrés, et un angle de roulage de pas plus de cinq degrés.

2. Revêtement selon la revendication 1, dans lequel la couche d'isolation est constituée de mousse rigide.

3. Revêtement selon la revendication 2, dans lequel la mousse rigide est constituée de microballons dans une matrice d'époxy.

4. Revêtement selon la revendication 1, dans lequel la surface superhydrophobe est un revêtement qui est pulvérisé sur une couche d'isolation.

5. Revêtement selon la revendication 1, dans lequel la surface est fonctionnelle sur l'air, sur terre ou sur mer, et est l'une parmi : une ligne d'électricité ; une antenne ; une surface externe d'un navire comprenant des ponts, des rails, des armes et des antennes ; et une surface d'aile ou de commande d'un véhicule aérien.

6. Procédé de réduction au minimum ou de prévention de la possibilité que des gouttes d'eau surfondue qui heurtent une surface se transforment en glace, le procédé comprenant l'application sur la surface du revêtement selon la revendication 1.

7. Procédé selon la revendication 6, dans lequel l'isolation est produite au moyen de mousse rigide.

8. Procédé selon la revendication 7, dans lequel la mousse rigide est constituée de microballons dans une matrice d'époxy.

9. Procédé selon la revendication 6, dans lequel le revêtement superhydrophobe est pulvérisé sur l'isolation.

10. Procédé selon la revendication 6, dans lequel la surface est l'une parmi : une ligne d'électricité ; une antenne ; une surface externe d'un navire comprenant des ponts, des rails, des armes et des antennes ; et une surface d'aile ou de commande d'un véhicule aérien.

11. Procédé selon la revendication 6, dans lequel la surface à revêtir est choisie parmi des véhicules à moteur, des bâtiments, comprenant des ascenseurs et des fenêtres, des surfaces de verre et des grands réfrigérateurs.

12. Procédé pour empêcher de la glace d'adhérer à une surface, le procédé comprenant la fourniture sur ladite surface du revêtement selon la revendication 1.
